# EUROPÄISCHE PATENTSCHRIFT

(11) **EP 2 943 313 B1**
(45) Veröffentlichungstag und Bekanntmachung des Hinweises auf die Patenterteilung: **04.03.2020**
(21) Anmeldenummer: 14703278.3
(22) Anmeldetag: 09.01.2014
(51) Int. Cl.: B23Q 1/00, B23Q 3/12, B23Q 3/18, H04B 5/00

(54) **MECHANISCHE SCHNITTSTELLE, MODULSYSTEM UND MASCHINE**
MECHANICAL INTERFACE, MODULE SYSTEM AND MACHINE
INTERFACE MÉCANIQUE, SYSTÈME MODULAIRE ET MACHINE

(30) Priorität: 09.01.2013 DE 102013100155
(43) Veröffentlichungstag der Anmeldung: 18.11.2015
(73) Patentinhaber: Helmut-Schmidt-Universität/ Universität der Bundeswehr Hamburg, 22043 Hamburg (DE); Hamburg Innovation GmbH, 21079 Hamburg (DE)
(72) Erfinder: WULFSBERG, Jens Peter, 20457 Hamburg (DE); GRIMSKE, Silka, 22941 Bargteheide (DE); STORJOHANN, Jens, 22765 Hamburg (DE); MÜLLER, Jens, 22589 Hamburg (DE)
(74) Vertreter: RGTH
(86) Internationale Anmeldenummer: PCT/EP2014/050306
(87) Internationale Veröffentlichungsnummer: WO 2014/108464

(56) Entgegenhaltungen:
- EP-A2- 1 050 363
- WO-A1-03/089188
- FR-A1- 2 395 105
- KR-B1- 100 827 795
- US-A- 4 525 918
- US-A- 5 261 758
- US-A1- 2007 183 315

## Beschreibung

### Beschreibung

Die Erfindung betrifft eine, insbesondere funktions- und prinziphybride, mechanische Schnittstelle für die Kopplung von einem Modul an einen Modulträger oder für die Kopplung von zwei Modulen umfassend eine erste Schnittstellenkomponente, eine zweite Schnittstellenkomponente, wobei die Schnittstellenkomponenten zueinander komplementär sind, ein Positionierungsmittel zur wiederholbaren Positionierung der zweiten Schnittstellenkomponente und der ersten Schnittstellenkomponente zueinander in einer vorbestimmten Position und ein Haltemittel zur Halterung der zweiten Schnittstellenkomponente an der ersten Schnittstellenkomponente. Des Weiteren betrifft die Erfindung ein Modulsystem umfassend eine vorbeschriebene mechanische Schnittstelle sowie eine Maschine umfassend ein Modulsystem und/oder eine mechanische Schnittstelle.

### Stand der Technik

Im Bereich der Montage- und Fertigungsverfahren sind flexible Werkzeugmaschinensysteme oder Bearbeitungszentren bekannt, die für verschiedene Bearbeitungsverfahren einen Werkzeugwechsel oder integrierte Technologien im Arbeitsraum anbieten. Im Mikromaschinenbau wurden miniaturisierte Maschinen (zum Beispiel durch die Universität Tampere, Finnland) entwickelt, die die Herstellung von Mikrobauteilen durch eine auf einen Tisch passende Maschine ermöglichen sollen. Die Verwendung von kleinen, insbesondere miniaturisierten Maschinen im Maschinenbau und Mikromaschinenbau wird auch als Desktop-Manufacturing bezeichnet. Die im Vergleich zu bekannten, hochpräzisen Maschinensystemen reduzierten Dimensionen ermöglichen und vereinfachen dabei die Implementierung eines modularen Werkzeugsystems in einer einfachen und benutzerfreundlichen Art und Weise.

Jedoch ist in beiden Bereichen, bei den Werkzeugmaschinensystemen und im Mikromaschinenbau, eine Ad-hoc-Konfiguration der gesamten Maschine - nicht nur in Bezug auf einen Werkzeugwechsel - nicht implementiert.

Eine mechanische Schnittstelle für den Mikromaschinenbau wird in dem Fachartikel "Square Foot Manufacturing - Advanced Implementation of Mechanical Interfaces" (Proceedings of the 11th euspen International Conference - Como - May 2011) offenbart. Die mechanische Schnittstelle besteht aus zwei Schnittstellenkomponenten, wobei eine untere Schnittstellenkomponente drei harte Metallkugeln, in einem Winkel von 120° zueinander angeordnet, umfasst. Diese Kugeln fassen präzise in eine obere Schnittstellenkomponente ein, welche sechs Karbidstäbe in paralleler Anordnung aufweist. Diese geometrische Anordnung ist auch als "kinematische Kopplung" bekannt und bietet eine hohe Wiederholgenauigkeit der Positionierung. Sechs Magnete, drei in jeder Schnittstellenkomponente, sorgen dabei für eine Haltekraft, welche ausreicht um die in der Mikrofertigung auftretenden Kräfte aufzunehmen.

Eine schaltbare Haltevorrichtung mit einem Permanentmagneten ist aus der US 4,055,824 A1 bekannt. Die Permanentmagnetanordnung besteht aus einem stationären Magneten mit einer kreisförmigen Öffnung und einem scheibenförmigen Magneten, welcher rotierbar in der Öffnung angeordnet ist. Beide Magnete sind in Richtung ihrer kleinsten Dimension magnetisiert, wobei jeweils Teilbereiche der Magnete eine entgegengesetzte magnetische Polarität aufweisen. Der scheibenförmige Magnet hat in einer Position eine magnetische Polarität, welche mit der des stationären Magneten übereinstimmt und dessen magnetische Kraft verstärkt. In einer anderen Position weist der scheibenförmige Magnet eine der magnetischen Polarität des stationären Magneten entgegengesetzte Polarität auf, wodurch sich die magnetischen Flüsse der Magneten gegenseitig abschwächen und reduzieren.

Die US 5,683,118 A1 offenbart eine kinematische Kopplung, welche mit wiederholbarer Genauigkeit die Positionierung von Komponenten einer Flüssigkeitskopplung oder einer elektrischen Kopplung gestattet. Hierfür weist die eine Komponente der Kopplung drei sphärische Oberflächen auf und die andere Komponente weist drei Auskehlungen auf. In den Kontaktbereichen zwischen den sphärischen Oberflächen und den Auskehlungen sind Löcher angeordnet durch welche eine Flüssigkeit im kontaktierten Zustand fließen kann. Für einen elektrischen Kontakt werden anstatt von Löchern für Flüssigkeiten elektrische Kontaktpads an den Kontaktflächen angeordnet.
Aus der WO 03/089188 A1 ist eine Vorrichtung zur Übertragung von Leistung und/oder Daten zwischen einem stationären Teil eines Maschinenwerkzeugs und einem Zubehörteil bekannt. Das Zubehörteil, beispielsweise eine Messvorrichtung, kann in ein konisch zulaufendes Gehäuse einer Spindel eingepasst werden. Hierfür weist das Zubehörteil einen kegelstumpfartigen Einsatz auf.
Die FR 2 395 105 A offenbart eine Wechselhalterung zum genau reproduzierbaren Einspannen eines Messwerkzeuges in eine Messvorrichtung. Die Wechselhalterung umfasst ein Oberteil und ein Unterteil, welche an der Messvorrichtung und an einem Werkzeug befestigt werden können, wobei Oberteil und Unterteil durch an ihnen vorgesehene Kopplungselemente miteinander verbindbar sind.
Die US 4,525,918 A offenbart einen zweikomponentigen Werkzeughalter, insbesondere für ein Maschinenwerkzeug oder einen Roboter. Zur Verbindung der zwei Komponenten des Werkzeughalters weist die erste Komponente eine konische Bohrung auf, in die ein konischer Schaft der zweiten Komponente einpasst.
Die EP 1 050 363 A2 offenbart ein Kupplungssystem für den Anschluss maschinenseitiger Versorgungsleitungen für Medien aller Art inklusive elektrischer Leitungen zwischen Werkzeugmaschinen und daran angekoppeltem Werkzeugstückträger, wobei wenigstens zwei korrespondierende Kupplungsteile des Kupplungssystems beim Aufspannen des Werkzeugstückträgers auf die Werkzeugmaschine zusammengeführt und automatisch zusammengekuppelt werden.
Aus der US 5,261,758 A sind Verbindungsmittel zur Verbindung zweier Körper bekannt.

Die US 2007/0183315 A1 offenbart eine mechanische Schnittstelle nach dem Oberbegriff des Anspruchs 1 mit einem Verbindungssystem für die Übertragung von Daten und zur Leistungsübertragung zwischen einem Sensor und einer Basiseinheit umfassend ein sensorseitiges und ein basisseitiges Verbindungselement. Ein Verbindungselement umfasst einen Mikrocontroller.

### Darstellung der Erfindung: Aufgabe, Lösung, Vorteile

Der Erfindung liegt die Aufgabe zugrunde durch Bereitstellung einer, insbesondere funktions- und prinziphybriden, besonders ausgestalteten mechanischen Schnittstelle kleine Werkzeugmaschinenmodule schnell konfigurierbar und rekonfigurierbar zu gestalten, sodass im Bereich der Mikrobearbeitung eine angepasste und somit wettbewerbsfähige Fertigung ermöglicht wird. Angepasst bedeutet hierbei eine mögliche Skalierung der Produktion, sowie die Art und Abfolge der Bearbeitungstechnologien, die teilespezifisch ausgewählt werden können. Als weitere Aufgabe liegt der Erfindung zugrunde, dass die Konfiguration und Rekonfiguration hochpräzise und unter verringertem Werkzeugeinsatz erfolgen soll.

In einem Aspekt der Erfindung ist eine mechanische Schnittstelle nach Anspruch 1 vorgesehen.

Ferner umfasst die Erfindung ein Modulsystem sowie eine Maschine.

### Darstellung der Erfindung: Aufgabe, Lösung, Vorteile

Der Erfindung liegt die Aufgabe zugrunde durch Bereitstellung einer, insbesondere funktions- und prinziphybriden, besonders ausgestalteten mechanischen Schnittstelle kleine Werkzeugmaschinenmodule schnell konfigurierbar und rekonfigurierbar zu gestalten, sodass im Bereich der Mikrobearbeitung eine angepasste und somit wettbewerbsfähige Fertigung ermöglicht wird. Angepasst bedeutet hierbei eine mögliche Skalierung der Produktion, sowie die Art und Abfolge der Bearbeitungstechnologien, die teilespezifisch ausgewählt werden können. Als weitere Aufgabe liegt der Erfindung zugrunde, dass die Konfiguration und Rekonfiguration hochpräzise und unter verringertem Werkzeugeinsatz erfolgen soll.

In einem Aspekt der Erfindung ist eine mechanische Schnittstelle für die Kopplung von einem Modul an einen Modulträger oder für die Kopplung von zwei Modulen vorgesehen, welche umfassend eine erste Schnittstellenkomponente, eine zweite Schnittstellenkomponente, wobei die Schnittstellenkomponenten zueinander komplementär sind, ein Positionierungsmittel zur wiederholbaren Positionierung der zweiten Schnittstellenkomponente und der ersten Schnittstellenkomponente zueinander in einer vorbestimmten Position und ein Haltemittel zur Halterung der zweiten Schnittstellenkomponente an der ersten Schnittstellenkomponente, ausgebildet ist, wobei die Schnittstelle ein Datenübertragungsmittel zur Übertragung von Daten zwischen der ersten Schnittstellenkomponente und der zweiten Schnittstellenkomponente und ein Leistungsübertragungsmittel zur Übertragung von elektrischer Leistung zwischen der ersten Schnittstellenkomponente und der zweiten Schnittstellenkomponente aufweist, wobei mindestens eine der Schnittstellenkomponenten einen Mikrocontroller aufweist, wobei der Mikrocontroller zur Speicherung von Daten ausgebildet ist, wobei in dem Mikrocontroller Kopplungsklassen definiert sind, und wobei für das jeweilige mit der Schnittstelle zu koppelnde Modul oder den Modulträger die Kopplungsklasse gespeichert ist.

Ferner umfasst die Erfindung ein Modulsystem sowie eine Maschine.

Die erfindungsgemäße Schnittstelle ist prinziphybrid, weil sie zum einen durch das Positionierungsmittel die präzise und wiederholbare Positionierung der zweiten Schnittstellenkomponente und der ersten Schnittstellenkomponente zueinander in einer vorbestimmten Position gestattet und weil sie zum anderen mit dem Haltemittel eine für die im Betrieb entstehenden Kräfte, Momente und Erschütterungen ausgelegte Halterung der zweiten Schnittstellenkomponente an der ersten Schnittstellenkomponente ermöglicht. Weiter ist die Schnittstelle funktionshybrid, weil sie neben der Funktion der mechanischen Übertragung von Kräften und Momenten auch elektrische Leistung und Informationen bzw. Daten zwischen den Schnittstellenkomponenten überträgt. Durch die Übertragung von Leistung und Daten zwischen den Schnittstellenkomponenten und damit insbesondere zwischen dem Modulträger, bevorzugt einer Werkzeugmaschine, auf der Seite der ersten Schnittstellenkomponente und dem Modul, bevorzugt einem Werkzeugmodul, auf der Seite der zweiten Schnittstellenkomponente kann in vorteilhafter Weise eine schnelle Konfiguration und Rekonfiguration der Werkzeugmaschinenmodule vorgenommen werden, wodurch insbesondere der Modul- bzw. Werkzeugmodulwechsel hochpräzise sowie unter verringertem Werkzeugeinsatz durchgeführt werden kann. Eine Ad-hoc-Konfiguration der gesamten Maschine kann dadurch implementiert werden. Mit weiterem Vorteil wird durch die Bereitstellung der erfindungsgemäßen Schnittstelle die insbesondere im Werkzeugmaschinenbereich und Mikromaschinenbau gewünschte Wandlungsfähigkeit erzielt.

Die Schnittstelle kann dabei zur Kopplung von Modul an Modulträger und zur Kopplung von Modul an Modul eingesetzt werden. Insbesondere bei der Anwendung in einem Werkzeugmaschinensystem können mittels der Schnittstelle verschiedene Werkzeugmodule an die Werkzeugmaschine gekoppelt werden, aber auch ein Vorschubmodul an die Werkzeugmaschine sowie Vorschubmodul an Vorschubmodul. Ebenso kann ein Werkstückträgermodul an einer Grundplatte oder an einem Vorschubmodul befestigt werden. Jedoch sind prinzipiell viele weitere Kopplungsmöglichkeiten denkbar, insbesondere lassen sich mehrere Module in Serie aneinander koppeln, wobei jeweils zwei Module durch eine Schnittstelle miteinander verbunden sind.

Als Module kommen auch Module für kraftlose Mess- und Bearbeitungsverfahren in Betracht, wie beispielsweise Laser für optische Messsysteme. Weiter kommen für die Schnittstelle neben dem Einsatz in Montage-, Fertigungs- und Spanverfahren auch der Einsatz in Verfahren zur Geometrieerzeugung, in Messverfahren und in Roboterschnittstellen in Betracht. Schließlich ist auch der Einsatz in Fertigungsstraßen für den Werkzeug- und Werkstückfluss möglich.

Erfindungsgemäß weist mindestens eine der Schnittstellenkomponenten eine als Mikrocontroller ausgebildete elektrische Kontrolleinheit auf.

Bevorzugt weisen beide Schnittstellenkomponenten mindestens eine elektrische Kontrolleinheit oder Recheneinheit, insbesondere einen Mikrocontroller, auf. In vorteilhafter Weise befähigen die elektrischen Kontrolleinheiten, bevorzugt die Mikrocontroller, die Schnittstelle unter anderem dazu Module zu identifizieren und Kopplungsvorgänge zu überwachen und zu zählen.

In einer vorteilhaften Ausgestaltung der Schnittstelle weist die Schnittstelle, insbesondere jede der beiden Schnittstellenkomponenten, Mittel zur Weiterleitung von elektrischer Leistung und/oder Daten auf. Dadurch können vorteilhafterweise elektrische Leistung und/oder Daten nicht nur zwischen erster und zweiter Schnittstellenkomponente und/oder zwischen Modul und Modulträger übertragen werden, sondern es wird auch möglich elektrische Leistung und/oder Daten zwischen Schnittstelle und Schnittstelle bzw. zwischen Modul und Modul zu übertragen. Besonders vorteilhaft können in einer Kopplung von Modulen in Serie, wobei jeweils zwei Module durch eine Schnittstelle miteinander verbunden sind, elektrische Leistung und Daten in jedes Modul und jede zwischen den Modulen angeordnete Schnittstelle übertragen werden. So kann in einem Beispiel ein Vorschub vermittels einer erfindungsgemäßen Schnittstelle an eine Werkzeugmaschine gekoppelt sein, und ein Werkzeug kann wiederum vermittels einer erfindungsgemäßen Schnittstelle an den Vorschub gekoppelt sein. Mit der Weiterleitung von elektrischer Leistung und Daten durch die Mittel zur Weiterleitung kann in somit vorteilhafter Weise eine schnelle Konfiguration und Rekonfiguration der gesamten Modul-Schnittstellenserie vorgenommen werden.

Erfindungsgemäß können in der als Mikrocontroller ausgebildeten elektrischen Kontrolleinheit Daten gespeichert werden.

Bevorzugt können in der elektrischen Kontrolleinheit beziehungsweise den elektrischen Kontrolleinheiten, insbesondere in den Mikrocontrollern, der Schnittstellenkomponenten, Daten gespeichert und/oder verarbeitet werden, welche es unter anderem ermöglichen, systembedingte minimale Positionierungsfehler aus der Kombination zweier miteinander verbundener Schnittstellenkomponenten zu kompensieren. Positionierungsfehler können dabei nicht nur durch die Kombination der Schnittstellenkomponenten entstehen, sondern können auch auf Modulebene durch Fertigungstoleranzen entstanden sein. Dabei kann es sich um intrinsische Fertigungstoleranzen des an der ersten oder zweiten Schnittstellenkomponente angeordneten Moduls beziehungsweise des auf der ersten oder zweiten Schnittstellenkomponente angeordneten Werkzeugs handeln, jedoch kann auch die Positionierung des Moduls, beziehungsweise des Werkzeugs, auf der ersten oder der zweiten Schnittstellenkomponente mit einem systematischen Fehler behaftet sein. Die Positionierungsfehler und die Fertigungstoleranzen können dabei vor Inbetriebnahme der Schnittstelle, bzw. der Werkzeugmaschine, vermessen werden. Mit besonderem Vorteil können die minimalen Positionierungsfehler und Fertigungstoleranzen und die daraus entstandenen akkumulierten Ungenauigkeiten bezogen auf den Modul- bzw. Werkzeugmittelpunkt in den elektrischen Kontrolleinheiten, insbesondere den Mikrocontrollern, gespeichert werden, wodurch eine Kompensation dieser Ungenauigkeiten und systematischen Fehler ermöglicht wird. Eine entsprechende Kalibrierung der Gesamtkonfiguration des Modulsystems beziehungsweise der Werkzeugmaschine ist in vorteilhafter Weise erzielbar. Die Daten können insbesondere auch vom Bediener in den elektrischen Kontrolleinheiten, insbesondere den Mikrocontrollern, gespeichert werden. Ferner können in den elektrischen Kontrolleinheiten, insbesondere in den Mikrocontrollern, Spezifikationsdaten des Moduls bzw. des Modulträgers oder der Schnittstellenkomponenten gespeichert sein.

Erfindungsgemäß sind in den jeweiligen als Mikrocontroller ausgebildeten elektrischen Kontrolleinheiten Kopplungsklassen definiert werden. Dabei können in vorteilhafter Weise durch die Kopplungsklassen Rahmenbedingungen, wie beispielsweise anzulegende elektrische Spannungen, Spannungs- und Temperaturbereiche, aber auch weitere denkbare Parameter, festgelegt werden. In den Mikrocontrollern wird für das jeweilige Modul oder den Modulträger, welches oder welcher mit der Schnittstelle gekoppelt werden soll, die Kopplungsklasse, beispielsweise durch einen sogenannten "öffentlichen und eindeutigen Erkennungsstempel", also einem einzigartigen Schlüssel, gespeichert, wodurch jedes Modul, beziehungsweise jedes Werkzeugmodul, identifizierbar wird und auf Kompatibilität beziehungsweise Inkompatibilität mit dem Arbeitsprozess und/oder weiteren Modulträgern beziehungsweise Modulen und Werkzeugen überprüft werden kann. So kann bei gleichzeitiger Verwendung von mehreren Schnittstellen in einem Werkzeugmaschinensystem die Kompatibilität der Schnittstellen und der vermittels der Schnittstellen gekoppelten Module überprüft werden. Auch bei einer Serienschaltung von Modulen und Schnittstellen ist die gesamte Serie mit Vorteil auf Kompatibilität, beispielsweise bezüglich vorgesehener Spannungs- und Temperaturbereiche überprüfbar. In vorteilhafter Weise kann bei Inkompatibilität die Weiterleitung von elektrischer Leistung und Daten verhindert werden.

Weiter ist es vorteilhaft, dass durch Definition und Speicherung der entsprechenden Kopplungsklassen prozesstechnisch inkompatible Kopplungsvorgänge vermieden werden können. Unter prozesstechnisch inkompatiblen Kopplungsvorgängen werden dabei Kopplungsvorgänge verstanden, bei denen Module mit Modulträgern oder weiteren Modulen gekoppelt werden, welche beispielsweise für unterschiedliche Medien geeignet sind. So kann zum Beispiel ein erstes Modul für den Betrieb in flüssigen Medien wie Öl und Wasser ausgelegt sein, während ein zweites Modul nur für den Betrieb und für die Anwendung in Luft ausgelegt ist. Eine gleichzeitige Kopplung dieser beiden Module kann daher aufgrund der unterschiedlich ausgelegten Anwendungsbereiche der beiden Module die Durchführung eines Arbeitsprozesses verhindern. Eine weitere prozessinkompatible Kopplung kann vorliegen, wenn zwei Module eine unterschiedliche und inkompatible Ortsauflösung aufweisen. Beispielhaft kann ein Werkzeugmodul eine Ortsauflösung aufweisen, welche höher als die eines Vorschubmoduls ist, sodass bei gleichzeitiger Kopplung von Werkzeugmodul und Vorschubmodul die für den Prozess beabsichtigte und durch das Werkzeugmodul gestattete Fertigungsgenauigkeit durch die geringere Ortsauflösung des Vorschubmoduls verhindert werden kann. Werden jedoch entsprechend der Ausführungsform Kopplungsklassen definiert, so kann eine derartige nachteilhafte Kopplung von Modulen verhindert werden.

In einer weiter vorteilhaften Ausgestaltung der Schnittstelle weist diese, bzw. weisen die elektrischen Kontrolleinheiten, insbesondere die Mikrocontroller, der Schnittstellenkomponenten einen sogenannten Kompatibilitätsmodus auf. Dabei kann durch die Übersetzungsfunktion des Kompatibilitätsmodus der elektrischen Kontrolleinheiten, insbesondere der Mikrocontroller, in den Schnittstellenkomponenten eine Kompatibilität zwischen verschiedenen Modulen sowie zwischen Modulen und dem Modulträger gesichert werden, falls diese unterschiedliche Übertragungsprotokolle und Übertragungsgeschwindigkeiten haben. Hierbei stellt sich die Schnittstelle automatisch auf das Modul, beispielsweise ein Werkzeug, oder den Modulträger ein. Mit weiterem Vorteil kann die Art des Protokollflusses zwischen der elektrischen Kontrolleinheit, insbesondere dem Mikrocontroller, der ersten Schnittstellenkomponente und der elektrischen Kontrolleinheit, insbesondere dem Mikrocontroller, der zweiten Schnittstellenkomponente eingestellt und je nach Datenaufkommen angepasst werden.

In einer besonders bevorzugten Ausführungsform führen die elektrischen Kontrolleinheiten eine Konfigurationssequenz nach der mechanischen Kopplung aus. Insbesondere kann dabei zu Beginn der Konfigurationssequenz die elektrische Kontrolleinheit, insbesondere der Mikrocontroller, der ersten Schnittstellenkomponente eine Kleinspannung von bevorzugt 5 V an die zweite Schnittstellenkomponente anlegen. Dadurch wird die elektrische Kontrolleinheit, insbesondere der Mikrocontroller, der zweiten Schnittstellenkomponente aktiviert. Weiter insbesondere sendet die elektrische Kontrolleinheit der zweiten Schnittstellenkomponente darauf hin ein charakteristisches Pulsmuster an die elektrische Kontrolleinheit der ersten Schnittstellenkomponente. Nach der Identifikation dieses Pulsmusters durch die erste Schnittstellenkomponente beziehungsweise durch die elektrische Kontrolleinheit der ersten Schnittstellenkomponente, antwortet diese mit einem weiteren elektronischen Signal, dem sogenannten "handshake". Nach der erfolgten und erfolgreichen Konfigurationssequenz kann dann insbesondere das Modul beziehungsweise das Werkzeug für den Prozessablauf freigeschaltet werden. Ganz besonders bevorzugt sendet das Modul, beziehungsweise das Werkzeug, oder die elektrische Kontrolleinheit der an dem Modul angeordneten Schnittstellenkomponente, während des Prozessablaufs fortwährend periodisch ein elektrisches Signal, insbesondere ein besonderes Pulsmuster, als ein sogenanntes "Lebenszeichen", welches kontinuierlich von der ersten Schnittstellenkomponente empfangen wird. Wird im Fall einer Fehlfunktion das Lebenszeichen nicht gesendet, so kann insbesondere von der elektrischen Kontrolleinheit der ersten Schnittstellenkomponente die Schnittstelle elektrisch getrennt werden, bzw. das Leitungsübertragungsmittel kann getrennt werden.

In einer weiteren zweckmäßigen Ausgestaltung der Schnittstelle weist diese Signalmittel, insbesondere optische Signalmittel auf, um eine Rückmeldung bevorzugt eine visuelle Rückmeldung über den Status der Konfigurationssequenz an den Bediener zu geben. Dabei können insbesondere Signal-LEDs vorgesehen sein, welche nach dem Ampelprinzip funktionieren.

Eine weitere bevorzugte Ausführungsform ergibt sich, wenn die Schnittstelle Mittel zur Gewährleistung eines elektrischen Berührungsschutzes aufweist. Diese Mittel können insbesondere als Schutzleiter ausgestaltet sein. Vorteilhafterweise können durch Vorsehung elektrischer Berührungsschutzmittel Maßnahmen zum Schutz gegen elektrischen Schlag bei direktem oder indirektem Berühren vorgesehen werden. Es ist dabei besonders vorteilhaft, wenn erst nach erfolgreich durchgeführter Konfigurationssequenz alle Signal- und Leistungsleitungen freigeschaltet werden. Dadurch wird verhindert, dass der Bediener bei geöffneter Schnittstelle durch direktes Berühren der nun offenliegenden Kontakte gefährliche Körperdurchströmungen erfährt.

Weiter bevorzugt wird der indirekte Berührungsschutz durch den Anschluss aller leitenden, nicht am Signal- und Leistungsfluss teilnehmenden Teile, wie zum Beispiel das Schnittstellengehäuse, an einen gemeinsamen Schutzleiter bzw. Erdungspunkt sichergestellt und als Anschluss für die jeweils mit der Schnittstelle zu verbindenden Geräte herausgeführt, sodass auf Modul- und Modulträgerebene ein adäquater Schutz unmittelbar am Prozess beteiligter Personen hergestellt werden kann.

In einer weiteren bevorzugten Ausführungsform ist das Positionierungsmittel eine kinematische Kopplung, bevorzugt ein Mehrfachkontakt besonders bevorzugt ein Sechspunktkontakt, und/oder das Haltemittel ein Magnetsystem, insbesondere ein Permanentmagnetsystem, und/oder das Datenübertragungsmittel ein elektrischer Berührkontakt, und/oder das Leistungsübertragungsmittel ist ein weiterer elektrischer Berührkontakt. Durch Verwendung eines Sechspunktkontaktes für das Positionierungsmittel kann eine präzise und wiederholbare Positionierung erreicht werden, da alle sechs Freiheitsgrade eines starren Körpers, insbesondere einer Schnittstellenkomponente systematisch festgelegt werden. Bei einem Sechspunktkontakt, auch als Ausführungsform einer kinematischen Kopplung bekannt, sind drei Kugeln in einem Dreieck angeordnet, und berühren je zwei (annähernd) parallele Zylinder und legen so alle Freiheitsgrade fest. Besonders vorteilhaft an dieser geometrischen Anordnung ist die sehr hohe Wiederholgenauigkeit bei einer ebenfalls einfachen Fertigung der Kopplungskomponenten. In vorteilhafter Weise ist das Haltesystem ein Magnetsystem, insbesondere ein Permanentmagnetsystem. Im Betrieb ist die Haltekraft dabei genügend groß, um die entsprechenden Module auch bei betriebsbedingt entstehenden Kräften, Momenten und Erschütterungen in Verbindung zu halten.

In weiterer vorteilhafter Weise wird zur einfachen Demontage die Haltekraft herabgesetzt. Dies geschieht bevorzugt durch mechanische Verstellung von Flussleitmitteln oder Permanentmagneten, wobei die Flussleitmittel die Magnetflüsse so ablenken, dass diese nicht mehr eine Haltekraft erzeugend über die Schnittstelle reichen, sondern im Wesentlichen innerhalb einer Seite bzw. innerhalb einer Komponente der Schnittstelle bleiben. Besonders vorteilhaft bei der Benutzung von Flussleitmitteln ist dabei, dass keinerlei Momenteinleitung in die Haltemagnete stattfindet. Eine derartige Momenteinleitung könnte das spröde Magnetmaterial gefährden. Auch werden keine eventuell durch einen dünnen Überzug geschützten korrosionsempfindliche Materialien durch Momenteinleitung und damit einhergehender reibenden Bewegungen abträglich beeinträchtigt. In einer besonders bevorzugten Ausführungsform umfasst das Magnetsystem einen ersten, oberen Ring, welcher Magnete und Flussleitmittel aufweist, sowie einen zweiten, unteren Ring, welcher ebenfalls Magnete und Flussleitmittel aufweist. Dabei sind vorteilhafterweise der erste, obere Ring und der zweite, untere Ring identisch zueinander ausgebildet. Mindestens einer der Ringe ist rotierbar gegenüber dem anderen Ring angeordnet. Durch Rotation des mindestens einen rotierbar angeordneten Ringes gegenüber dem anderen Ring kann die Haltekraft herabgesetzt und/oder eingestellt bzw. variiert werden.

Die Übertragung von elektrischer Leistung und Daten zwischen den elektrischen Kontrolleinheiten, insbesondere zwischen den Mikrocontrollern, wird durch Datenübertragungsmittel und Leistungsübertragungsmittel gewährleistet. Dabei ist insbesondere bevorzugt, dass das Datenübertragungsmittel als sich berührende Kontaktflächen von Leiterpaaren realisiert ist. Besonders bevorzugt umfasst der Berührkontakt einen Pin und als Gegenstück einen sogenannten Pad. Dabei sind bevorzugt die Pins jeweils gefedert gelagert und die Pads jeweils starr ausgeführt. Insbesondere umfasst das Datenübertragungsmittel keinen Steckkontakt. Somit kann in vorteilhafter Weise eine, beispielsweise durch mechanisch beschädigte oder verbogene Steckkontakte verursachbare, Beeinflussung auf die Positionierung der Schnittstelle weitestgehend vermieden werden. Mit weiterem Vorteil ist auch das Leistungsübertragungsmittel als ein elektrischer Berührkontakt ausgebildet, welcher insbesondere bevorzugt aus einem Pin und einem Pad besteht. Auch bei dem Leistungsübertragungsmittel sind in vorteilhafter Weise die Pins jeweils gefedert gelagert und die Pads jeweils starr ausgeführt. Bevorzugt umfasst auch das Leistungsübertragungsmittel keinen Steckkontakt. Durch Bereitstellung federnd gelagerter Berührkontakte können insbesondere elektrische Leistungen sowie analoge beziehungsweise digitale Signale direkt übertragen werden. Jedoch ist prinzipiell auch eine Übertragung von Leistung und Daten beziehungsweise Informationen mittels induktiver Methoden, oder auch durch funktechnische oder optische Übertragung möglich.

In einer besonders bevorzugten Ausführungsform umfasst die mechanische Schnittstelle sechs Signalpins, einen Leistungspin für die Stromhinleitung, einen Leistungspin für die Stromrückleitung und einen Leistungspin für den gemeinsamen Schutzleiter, wobei die Leistungspins entsprechend der zu übertragenden Leistung von den Signalpins entfernt angeordnet sind. Dadurch wird vorteilhafter Weise erreicht, dass die Leistungsübertragung nicht mit der Informations- und Datensignalübertragung interferiert. Jedoch können auch je nach Ausgestaltung und Anwendungsart mehr oder weniger Signalpins beziehungsweise mehr oder weniger Leistungspins vorgesehen sein. Jedem Signalpin oder Leistungspin ist bevorzugt ein Signalpad oder Leistungspad zur Herstellung des Berührkontaktes zugeordnet.

In einer weiteren zweckmäßigen Ausgestaltung der mechanischen Schnittstelle wird mit Hilfe der integrierten elektrischen Kontrolleinheiten, insbesondere der Mikrocontroller, eine Temperaturüberwachung durchgeführt. Bei Über- oder Unterschreiten eines im Rahmen der Prozesssicherheit voreingestellten Temperaturbereiches kann dann die Schnittstelle vorteilhafterweise elektrisch getrennt werden. So kann beispielsweise durch Verschmutzungen an den Leistungsübertragungsmitteln ein örtlich erhöhter Übergangswiderstand beim Zuschalten der elektrischen Leistung die Entstehung eines Lichtbogens begünstigen, welcher zu einem deutlichen Temperaturanstieg in der Schnittstelle führen kann, sodass die elektrischen Kontrolleinheiten eine elektrische Trennung durchführen. Dabei wird mit Vorteil der gemeinsame Schutzleiter nicht getrennt, damit der indirekte Berührschutz für die Bediener bestehen bleibt.

Ferner ist bei ansteigenden Temperaturen ein Nachlassen der Magnetkraft der Haltemittel zu befürchten. Daher kann bei einem Anstieg der Temperatur die Überwachung und/oder Steuerung der Schnittstelle an ein übergeordnetes Steuerungssystem weitergegeben werden oder durch eine Kontroll-LED angezeigt werden, dass eine vollständige Kopplung durch die eventuell nachlassende Haltekraft nicht mehr gegeben ist. Eine elektrische Trennung der Schnittstelle kann dann zusätzlich stattfinden.

In einem weiteren Aspekt betrifft die Erfindung ein Modulsystem umfassend ein erstes Modul und einen Modulträger oder umfassend ein erstes Modul und ein zweites Modul, welches eine vorbeschriebene Schnittstelle aufweist. Dabei ist die zweite Schnittstellenkomponente an dem ersten Modul anordbar und die erste Schnittstellenkomponente an dem Modulträger oder an dem zweiten Modul anordbar, dass erste Modul ist mittels der Schnittstelle an dem Modulträger oder an dem zweiten Modul anordbar und elektrische Leistung und/oder Daten können zwischen dem ersten Modul und dem Modulträger oder dem zweiten Modul mittels der Schnittstelle übertragen werden. Die Module werden dabei entsprechend eines Bohrbildes an der zweiten Schnittstelle ausgerichtet und befestigt. Ebenso kann die erste Schnittstellenkomponente an dem Modulträger entsprechend eines Bohrbildes ausgerichtet und befestigt werden. Mit der Bereitstellung dieses Modulsystems lassen sich mehrere Modulsysteme in einer größeren Einheit integrieren, wodurch insbesondere die Durchführung komplexer Prozessabläufe welche mehrere Arbeitsschritte benötigen, ermöglicht wird.

In einer bevorzugten Ausführungsform des Modulsystems ist der Modulträger ein Werkzeugträger, insbesondere ein Werkzeugträger für Mikrowerkzeuge, und das Modul ist ein Werkzeugmodul, insbesondere ein Mikrowerkzeug. Die Werkzeugmodule können dabei beispielsweise Werkzeugmodule für Montage- und Fertigungsverfahren beziehungsweise Spanverfahren sein. Insbesondere können die Module unter anderem als Mikrowerkzeug, Vorschub, Grundplatte, Werkstückträger ausgebildet sein.

In einem weiteren Aspekt betrifft die Erfindung eine Maschine, insbesondere eine Werkzeugmaschine, welche insbesondere ein vorbeschriebenes Modulsystem und/oder eine vorbeschriebene mechanische Schnittstelle für die Kopplung von Modulen an einen Modulträger oder für die Kopplung von Modulen umfasst. Die Maschine kann dabei insbesondere für die Geometrieerzeugung eingesetzt werden und/oder für Montage- und Fertigungsverfahren, beziehungsweise Spanverfahren.

In einer bevorzugten Ausführungsform weist die Maschine ein übergeordnetes Steuerungssystem auf, wobei das Steuerungssystem zum Datenaustausch mit dem Mikrocontroller der ersten Schnittstellenkomponente und/oder der zweiten Schnittstellenkomponente ausgebildet ist. Weiter kann das Steuerungssystem zur Auswertung von Daten der elektrischen Kontrolleinheiten, insbesondere der Mikrocontroller, ausgebildet sein sowie zum Senden beziehungsweise Empfangen von Daten an bzw. von den elektrischen Kontrolleinheiten. In besonders vorteilhafter Weise ist das Steuerungssystem insbesondere durch Auswertung von Daten der elektrischen Kontrolleinheiten zur Steuerung der Maschine und/oder der Schnittstelle und/oder der Module oder der Modulträger ausgebildet und kann insbesondere zur Kalibrierung der Gesamtkonfiguration der Maschine ausgebildet sein.

In einer zweckmäßigen Ausführungsform weist die Maschine Temperatursensoren auf, mit denen die Temperatur in oder in der Nähe der Schnittstelle gemessen werden kann. Durch Messen der Temperatur kann insbesondere bei Über- oder Unterschreitung eines im Rahmen der Prozesssicherheit voreingestellten Temperaturbereiches die Schnittstelle elektrisch getrennt werden.

In einer weiteren Ausgestaltungsform der Maschine weist diese Positionsmessmittel auf. Mit besonderem Vorteil kann mittels dieser Positionsmessmittel die genaue Position der Module und oder /der Schnittstelle in allen sechs Freiheitsgraden präzise bestimmt werden. Insbesondere bevorzugt kann das Steuerungssystem durch Auswertung der Positionsdaten sowie der in den elektrischen Kontrolleinheiten der Schnittstellenkomponenten gespeicherten systematischen Positionierungsfehler Abweichungen des vermuteten Werkzeugmittelpunktes zum realen Werkzeugmittelpunkt bestimmen und eine entsprechende Kalibrierung der Gesamtkonfiguration vornehmen.

Mit weiterem Vorteil kann das übergeordnete Steuerungssystem für die Kalibration auch thermische Einflüsse in Betracht ziehen.

### Kurze Beschreibung der Zeichnungen

Ein Ausführungsbeispiel der Erfindung wird nachstehend anhand der Zeichnungen näher erläutert. Es zeigen
- Fig. 1: in einer perspektivischen Ansicht schematisch die Werkzeugmaschinenseite einer Mikrowerkzeugmaschine umfassend eine Schnittstelle,
- Fig. 2: in einer Aufsicht eine erste Schnittstellenkomponente, und
- Fig. 3: eine zweite Schnittstellenkomponente in einer Aufsicht.

### Bevorzugte Ausführungsform der Erfindung

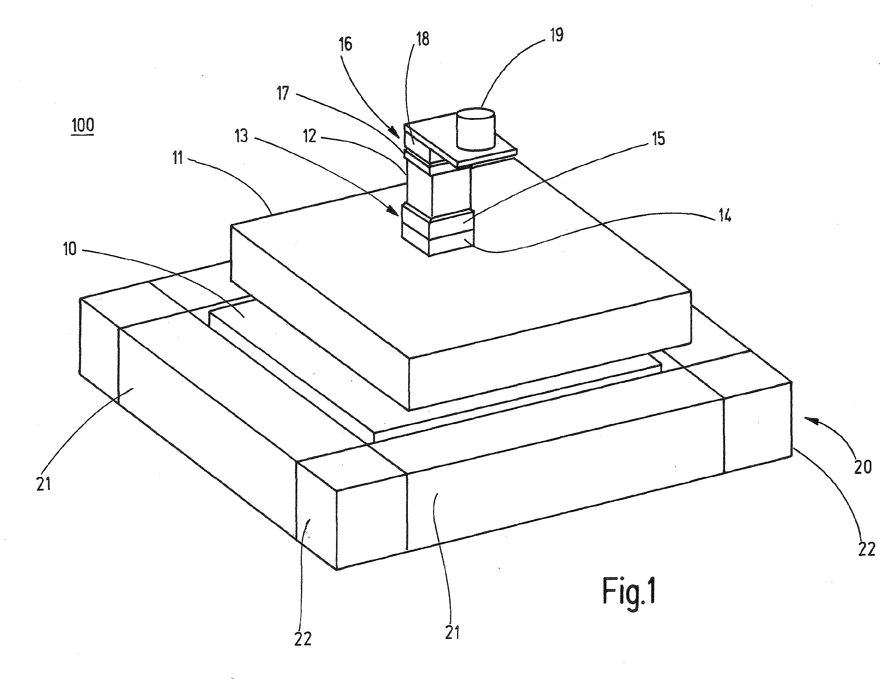

In Fig. 1 ist schematisch die Werkzeugmaschinenseite einer als Mikrowerkzeugmaschine (100) ausgebildeten erfindungsgemäßen Maschine dargestellt. In Fig. 1 nicht dargestellt ist die Werkstückseite der Mikrowerkzeugmaschine (100), welche beispielsweise mindestens ein Vorschubmodul und ein Werkstückmodul aufweisen kann. Die dargestellte Werkzeugmaschinenseite der Mikrowerkzeugmaschine (100) ist somit keine vollständige Mikrowerkzeugmaschine (100). Die Mikrowerkzeugmaschine (100) weist eine Grundplatte (10), ein erstes Vorschubmodul (11) sowie ein zweites, als xy-Tisch ausgebildetes, Vorschubmodul (12) auf. Das zweite als xy-Tisch ausgebildete Vorschubmodul (12) ist dabei mittels einer ersten erfindungsgemäßen Schnittstelle (13) an das erste Vorschubmodul (11) gekoppelt. Die erste Schnittstelle (13) umfasst eine erste Schnittstellekomponente (14) und eine zweite Schnittstellenkomponente (15). Die erste Schnittstellenkomponente (14) ist an dem ersten Vorschubmodul (11) angeordnet, und die zweite Schnittstellenkomponente (15) ist mit einem der ersten Schnittstelle (13) zugewandten Bereich des zweiten Vorschubmoduls (12) verbunden. An dem der ersten Schnittstelle (13) abgewandten Bereich des als xy-Tisch ausgebildeten Vorschubmoduls (12) ist eine zweite erfindungsgemäße Schnittstelle (16) umfassend eine erste Schnittstellenkomponente (17) und eine zweite Schnittstellenkomponente (18) angeordnet. An der zweiten Schnittstellenkomponente (18) der zweiten Schnittstelle (16) ist ein als Werkzeugspindel ausgebildetes Werkzeugmodul (19) angebracht. Ferner weist die Mikrowerkzeugmaschine (100) einen, hier schematisch dargestellten, rechteckigen bzw. quadratischen Stabilisierungsrahmen (20) umfassend Rahmenelemente (21) und Verbindungselemente (22) auf. Die dargestellte Werkzeugmaschinenseite der Mikrowerkzeugmaschine (100) kann dabei ein Teil oder eine Grundeinheit eines größeren Werkzeugsystems (hier nicht gezeigt) bilden. Weiter weist die Mikrowerkzeugmaschine (100) ein Steuerungssystem auf, welches in einer elektronischen Kontrolleinheit, hier nicht gezeigt, implementiert ist. Ferner können Temperatursensoren in oder in der Nähe der Schnittstellen (13, 16) und Positionsmessmittel vorhanden sein, die insbesondere mit dem Steuerungssystem Daten austauschen. Erstes Vorschubmodul (11), erste Schnittstelle (13), zweites Vorschubmodul (12), zweite Schnittstelle (14) und Werkzeugspindel (19) sind als Modul-Schnittstellenserie ausgebildet, wobei die Schnittstellen (13, 16) erfindungsgemäß elektrische Leistung und Daten zwischen den Modulen (11, 12, 19) und der Mikrowerkzeugmaschine (100), bzw. dem Steuerungssystem, übertragen. Das Steuerungssystem kontrolliert und koordiniert die von den Vorschüben (11, 12) und der Werkzeugspindel (19) durchzuführenden Arbeitsschritte.

Für eine grobe räumliche Ausrichtung kann die erste Schnittstelle (13) mitsamt des an diesem angeordneten zweiten Vorschubmoduls (12) durch das erste Vorschubmodul (11) in zwei Dimensionen bewegt werden. Für eine weitere Feinjustage sorgt das als xy-Tisch ausgebildete zweite Vorschubmodul (12), welches ebenso wie das erste Vorschubmodul (11) von dem Steuerungssystem kontrolliert wird. Durch das Zusammenspiel von erstem Vorschubmodul (11) und zweitem Vorschubmodul (12) lässt sich die Position der Werkzeugspindel (19) in zwei Dimensionen präzise und wiederholbar steuern. Zusätzlich zu einer Justage in zwei Dimensionen ist prinzipiell auch eine Steuerung in drei Dimensionen sowie Rotationen um räumliche Achsen durch Einsatz entsprechend ausgebildeter Vorschübe und Rotationsmodule möglich, sodass alle 6 Freiheitsgrade eines Werkzeugs oder eines Werkstückes mit dem Mikrowerkzeugsystem (100) festgelegt werden können.

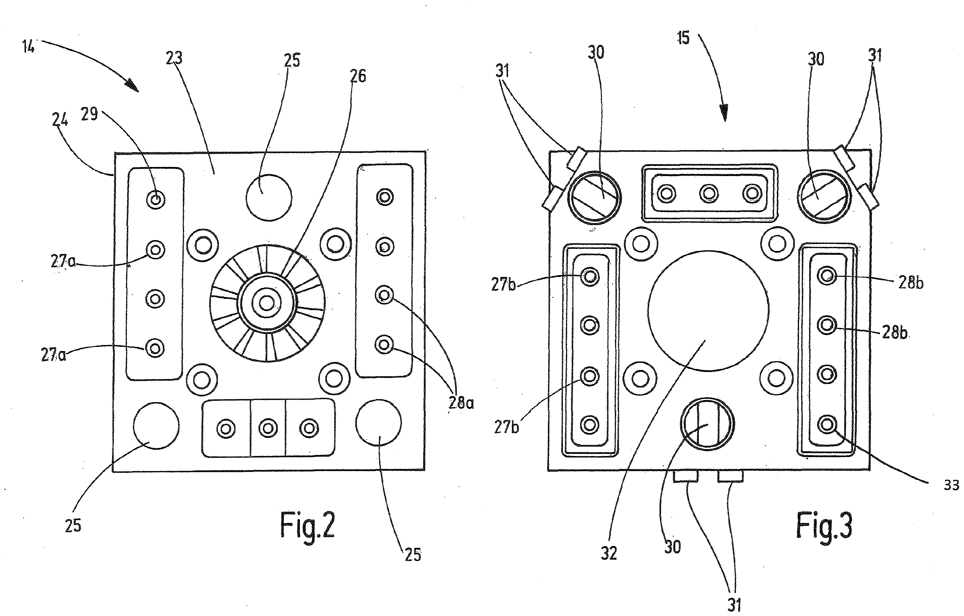

Die in einer Aufsicht in Fig. 2 dargestellte erste Schnittstellenkomponente (14) weist einen Grundkörper (23) mit einer Aluminiumhülle (24) auf. Drei Keramikkugeln (25) sind in einer dreieckförmigen Anordnung in den Grundkörper (23) der Schnittstellenkomponente (14) eingelassen und fest mit diesem verbunden. Die Keramikkugeln (25) dienen als Positionierungsmittel der kinematischen Kopplung von erster und zweiter Schnittstellenkomponente (14, 15). Im Zentralbereich der ersten Schnittstellenkomponente (14) ist eine kreisförmige Aussparung zu sehen, welche von einem Magnetsystem (26) ausgefüllt wird. Das Magnetsystem (26) dient dabei als Haltemittel welches die zweite, in Fig. 3 gezeigte Schnittstellenkomponente (15) an der ersten Schnittstellenkomponente (14) magnetisch hält. Das vom Magnetsystem (26) erzeugte Magnetfeld lässt sich dabei durch Einsatz von Flussleitmitteln derart umlenken, dass es im Wesentlichen innerhalb der ersten Schnittstellenkomponente (14) verläuft, und somit die Haltekraft zwischen erster und zweiter Schnittstellenkomponente (14, 15) soweit herabgesetzt wird, dass eine einfache Demontage der zweiten Schnittstellenkomponente (15) von der ersten Schnittstellenkomponente (14) erfolgen kann. In den Außenbereichen der Schnittstellenkomponente (14), in etwa zwischen den Keramikkugeln (25) befinden sich Datenübertragungsmittel (27a) und Leistungsübertragungsmittel (28a) der ersten Schnittstellenkomponente zur Übertragung von Daten und elektrischer Leistung zwischen erster Schnittstellenkomponente (14) und zweiter Schnittstellenkomponente (15). Dabei sind die Datenübertragungsmittel (27a) und die Leistungsübertragungsmittel (28a) in Form von federnd gelagerten metallischen Pins (29) ausgebildet.

Die zweite Schnittstellenkomponente (15) ist in Fig. 3 in einer Aufsicht dargestellt. Komplementär zu den Keramikkugeln (25) der ersten Schnittstellenkomponente (14) sind für die Positionierungsmittel drei Öffnungen (30) in die zweite Schnittstellenkomponente (15) eingelassen. Durch die drei Öffnungen (30) wird der Blick frei auf jeweils zwei in etwa parallel angeordnete Hartmetallstäbe (31), wobei der Winkel zwischen einem Paar Hartmetallstäben (31) einer ersten Öffnung zu den Hartmetallstäben (31) einer zweiten Öffnung in etwa 120° beträgt. Wird nun die erste Schnittstellenkomponente (14) an der zweiten Schnittstellenkomponente (15) angeordnet, so kommt jeweils eine der in der ersten Schnittstellenkomponente (14) eingelassen Keramikkugeln (25) mit je zwei in einem Loch (30) der zweiten Schnittstellenkomponente (15) angeordneten Hartmetallstäbe (31) an zwei Kontaktpunkten in Berührung. Somit wird insgesamt durch die drei Keramikkugeln (25) und die sechs Hartmetallstäbe (31) ein Positionierungsmittel bereitgestellt, welches erlaubt sämtliche sechs Freiheitsgrade zwischen erster Schnittstellenkomponente (14) und zweiter Schnittstellenkomponente (15) festzulegen. Im Zentralbereich der zweiten Schnittstellenkomponente (15) befindet sich eine metallische Haftplatte (32), welche als Gegenstück zu dem Magnetsystem (26) der ersten Schnittstellenkomponente (14) ausgebildet ist, und mit diesem zusammen das magnetische Haltesystem formt. In etwa zwischen den drei Öffnungen (30) mit den Hartmetallstäben (31) befinden sich an den Außenbereichen der zweiten Schnittstellenkomponente (15) Datenübertragungsmittel (27b) und Leitungsübertragungsmittel (28b) der zweiten Schnittstellenkomponente (15), welche als Gegenstück zu den Datenübertragungsmitteln (27a) und Leitungsübertragungsmitteln (28a) der ersten Schnittstellenkomponente (14) ausgebildet sind. Die Daten- und Leitungsübertragungsmittel (27b, 28b) der zweiten Schnittstellenkomponente (15) sind dabei starr gelagerte, als elektrische Kontakt-Pads (33) ausgebildete, Berührkontakte. Durch das Zusammenspiel der Datenübertragungsmittel (27a, 27b) von erster und zweiter Schnittstellenkomponente (14, 15) können im Zustand aneinander angeordneter Schnittstellenkomponenten (14, 15) Daten zwischen den beiden Schnittstellenkomponenten (14, 15), bzw. zwischen der Mikrowerkzeugmaschine (100) und den Werkzeugen (19) übermittelt werden. Zur Identifizierung von Werkzeugen, zur Überwachung von Kopplungsvorgängen und zur Übertragung spezifischer Komponenteninformationen zwischen Werkzeug und dem übergeordneten Steuerungssystem sind in die beiden Schnittstellenkomponente (14, 15) der Figs. 2 und 3 nicht weiter dargestellte Mikrocontroller integriert, welche über die Datenübertragungsmittel (27a, 27b) mit dem Steuerungssystem der Mikrowerkzeugmaschine (100) und den Werkzeugen (19) sowie anderen Schnittstellen kommunizieren können.

### Liste der Bezugszeichen

- 100: Mikrowerkzeugmaschine
- 10: Grundplatte
- 11: Erstes Vorschubmodul
- 12: Zweites Vorschubmodul
- 13: Erste Schnittstelle
- 14: Erste Schnittstellenkomponente der ersten Schnittstelle
- 15: Zweite Schnittstellenkomponente der ersten Schnittstelle
- 16: Zweite Schnittstelle
- 17: Erste Schnittstellenkomponente der zweiten Schnittstelle
- 18: Zweite Schnittstellenkomponente der zweiten Schnittstelle
- 19: Werkzeugspindel
- 20: Stabilisierungsrahmen
- 21: Rahmenelemente
- 22: Verbindungselemente
- 23: Grundkörper der ersten Schnittstellenkomponente
- 24: Aluminiumhülle
- 25: Keramikkugeln
- 26: Magnetsystem
- 27a: Datenübertragungsmittel der ersten Schnittstellenkomponente
- 27b: Datenübertragungsmittel der zweiten Schnittstellenkomponente
- 28a: Leistungsübertragungsmittel der ersten Schnittstellenkomponente
- 28b: Leistungsübertragungsmittel der zweiten Schnittstellenkomponente
- 29: Federnd gelagerter Pin
- 30: Öffnung in zweiter Schnittstellenkomponente
- 31: Hartmetallstäbe
- 32: Haftplatte
- 33: Starr gelagerter Pad

## Patentansprüche

1. Mechanische Schnittstelle (13) für die Kopplung von einem Modul an einen Modulträger oder für die Kopplung von zwei Modulen umfassend eine erste Schnittstellenkomponente (14), eine zweite Schnittstellenkomponente (15), wobei die Schnittstellenkomponenten (14, 15) zueinander komplementär sind, ein Positionierungsmittel zur wiederholbaren Positionierung der zweiten Schnittstellenkomponente (15) und der ersten Schnittstellenkomponente (14) zueinander in einer vorbestimmten Position und ein Haltemittel zur Halterung der zweiten Schnittstellenkomponente (15) an der ersten Schnittstellenkomponente (14), wobei die Schnittstelle (13) ein Datenübertragungsmittel (27a, 27b) zur Übertragung von Daten zwischen der ersten Schnittstellenkomponente (14) und der zweiten Schnittstellenkomponente (15) und ein Leistungsübertragungsmittel (28a, 28b) zur Übertragung von elektrischer Leistung zwischen der ersten Schnittstellenkomponente (13) und der zweiten Schnittstellenkomponente (14) aufweist, mindestens eine der Schnittstellenkomponenten (14, 15) einen Mikrocontroller aufweist, und der Mikrocontroller zur Speicherung von Daten ausgebildet ist,
**dadurch gekennzeichnet, dass** in dem Mikrocontroller Kopplungsklassen definiert sind, und dass für das jeweilige mit der Schnittstelle zu koppelnde Modul oder den Modulträger die Kopplungsklasse gespeichert ist, so dass das Modul oder der Modulträger identifizierbar wird und auf Kompatibilität beziehungsweise Inkompatibilität mit dem Arbeitsprozess und/oder weiteren Modulträgern beziehungsweise Modulen und Werkzeugen überprüft werden kann.

2. Mechanische Schnittstelle nach Anspruch 1, **dadurch gekennzeichnet, dass** beide Schnittstellenkomponenten (14, 15) einen Mikrocontroller aufweisen.

3. Mechanische Schnittstelle nach Anspruch 1 oder 2, **dadurch gekennzeichnet, dass** die Daten insbesondere systembedingte Positionierungsfehler, Fertigungstoleranzen oder Spezifikationsdaten des Moduls bzw. des Modulträger oder der Schnittstellenkomponenten sind.

4. Mechanische Schnittstelle nach einem der vorgenannten Ansprüche, **dadurch gekennzeichnet, dass** das Positionierungsmittel eine kinematische Kopplung, bevorzugt ein Mehrpunktkontakt, besonders bevorzugt ein Sechspunktkontakt ist, und/oder dass das Haltemittel ein Magnetsystem (26), insbesondere ein Permanent-Magnetsystem ist, und/oder dass das Datenübertragungsmittel (27a, 27b) ein elektrischer Berührkontakt ist, und/oder dass das Leistungsübertragungsmittel (28a, 28b) ein elektrischer Berührkontakt ist.

5. Modulsystem umfassend ein erstes Modul und einen Modulträger oder umfassend ein erstes Modul und ein zweites Modul, **dadurch gekennzeichnet, dass** das Modulsystem eine mechanische Schnittstelle (13) nach einem der vorangegangenen Ansprüche aufweist, wobei die zweite Schnittstellenkomponente (15) an dem ersten Modul anordbar ist, die erste Schnittstellenkomponente (14) an dem Modulträger oder an dem zweiten Modul anordbar ist, das erste Modul mittels der Schnittstelle (13) an dem Modulträger oder an dem zweiten Modul anordbar ist, und elektrische Leistung und/oder Daten zwischen dem ersten Modul und dem Modulträger oder zwischen den Modulen mittels der Schnittstelle (13) übertragbar sind.

6. Modulsystem nach Anspruch 5, **dadurch gekennzeichnet, dass** der Modulträger ein Werkzeugträger, insbesondere ein Werkzeugträger für Mikrowerkzeuge ist, und dass das Modul ein Werkzeugmodul, insbesondere ein Mikrowerkzeug, ist.

7. Maschine, bevorzugt Werkzeugmaschine, besonders bevorzugt Mikrowerkzeugmaschine (100), **dadurch gekennzeichnet, dass** die Maschine ein Modulsystem nach Anspruch 5 oder 6 und/oder eine mechanische Schnittstelle (13) für die Kopplung von Modulen an einen Modulträger oder für die Kopplung von zwei Modulen nach einem der Ansprüche 1 bis 4 aufweist.

8. Maschine nach Anspruch 7, **dadurch gekennzeichnet, dass** die Maschine ein Steuerungssystem aufweist, wobei das Steuerungssystem zum Datenaustausch mit dem Mikrocontroller der ersten Schnittstellenkomponente (14) und/oder der zweiten Schnittstellenkomponente (15) ausgebildet ist, dass das Steuerungssystem zur Auswertung von Daten des Microcontrollers ausgebildet ist, und dass das Steuerungssystem zum Senden und/oder Empfangen von Daten an den/von dem Microcontroller ausgebildet ist.

9. Maschine nach Anspruch 8, **dadurch gekennzeichnet, dass** das Steuerungssystem, insbesondere durch Auswertung von Daten des Mikrocontrollers, zur Steuerung der Maschine und/oder der Schnittstelle (13) und/oder der Module und/oder der Modulträger ausgebildet ist, und/oder dass das Steuerungssystem zur Kalibrierung der Gesamtkonfiguration ausgebildet ist.

10. Maschine nach einem der Ansprüche 7 bis 9, **dadurch gekennzeichnet, dass** die Maschine mit einem Temperatursensor in oder in der Nähe der Schnittstelle (13) ausgebildet ist.

## Claims

1. A mechanical interface (13) for the coupling of a module to a module carrier or for the coupling of two modules comprising a first interface component (14), a second interface component (15), wherein the interface components (14, 15) are complementary to each other, a positioning means for the repeatable positioning of the second interface component (15) and the first interface component (14) relative to one another in a predetermined position and a holding means for holding the second interface component (15) at the first interface component (14),
wherein the interface (13) has a data transmission means (27a, 27b) for transmitting data between the first interface component (14) and the second interface component (15) and a power transmission means (28a, 28b) for transmitting electrical power between the first interface component (14) and the second interface component (15), at least one of the interface components (14, 15) has a microcontroller, and the microcontroller is designed for storing data,
**characterized in that**
coupling classes are defined in the microcontroller,
and that the coupling class is stored for the respective module to be coupled to the interface or for the module carrier, so that the module or the module carrier becomes identifiable and can be checked for compatibility or incompatibility with the work process and / or further module carriers or modules and tools.

2. The mechanical interface according to claim 1, **characterized in that** both interface components (14, 15) have a microcontroller.

3. The mechanical interface according to claim 1 or 2, **characterized in that** the data are in particular system-inherent positioning errors, manufacturing tolerances or specification data of the module or the module carrier or the interface components.

4. The mechanical interface according to one of the preceding claims, **characterized in that** the positioning means is a kinematic coupling, preferably a multipoint contact, particularly preferably a six-point contact, and / or that the holding means is a magnet system (26), in particular a permanent magnet system, and / or **in that** the data transmission means (27a, 27b) is an electrical touch contact, and / or that the power transmission means (28a, 28b) is an electrical touch contact.

5. Module system comprising a first module and a module carrier or comprising a first module and a second module, **characterized in that** the module system has a mechanical interface (13) according to one of the preceding claims, wherein the second interface component (15) can be arranged at the first module, the first interface component (14) can be arranged at the module carrier or at the second module, the first module can be arranged at the module carrier or at the second module by means of the interface (13), and electrical power and / or data are transferable between the first module and the module carrier or between the modules by means of the interface (13).

6. Module system according to claim 5, **characterized in that** the module carrier is a tool carrier, in particular a tool carrier for micro-tools, and that the module is a tool module, in particular a micro-tool.

7. Machine, preferably a machine tool, particularly preferably a micro-machine tool (100), **characterized in that** the machine has a module system according to claim 5 or 6 and / or a mechanical interface (13) for the coupling of modules to a module carrier or for the coupling of two modules according to one of claims 1 to 4.

8. Machine according to claim 7, **characterized in that** the machine has a control system, wherein the control system is configured for data exchange with the microcontroller of the first interface component (14) and / or of the second interface component (15), that the control system is configured for the evaluation of data of the microcontroller, and that the control system is configured for transmitting and / or receiving data to / from the microcontroller.

9. Machine according to claim 8, **characterized in that** the control system, in particular by evaluation of data of the microcontroller, is configured for controlling the machine and / or the interface (13) and / or the modules and / or the module carriers and / or that the control system is configured for calibrating the overall configuration.

10. Machine according to one of claims 7 to 9, **characterized in that** the machine is formed with a temperature sensor in or in the vicinity of the interface (13).

## Revendications

1. Interface mécanique (13) pour l'accouplement d'un module à un support de module ou pour l'accouplement de deux modules comprenant un premier composant d'interface (14), un deuxième composant d'interface (15), sachant que les composants d'interface (14, 15) sont complémentaires l'un par rapport à l'autre, un moyen de positionnement pour le positionnement reproductible du deuxième composant d'interface (15) et du premier composant d'interface (14) dans une position prédéterminée et un moyen de maintien pour la fixation du deuxième composant d'interface (15) au premier composant d'interface (14),
sachant que
l'interface (13) comporte un moyen de transmission de données (27a, 27b) pour la transmission de données entre le premier composant d'interface (14) et le deuxième composant d'interface (15) et un moyen de transmission de puissance (28a, 28b) pour la transmission de la puissance électrique entre le premier composant d'interface (13) et le deuxième composant d'interface (14), au moins un des composants d'interface (14, 15) comporte un micro-contrôleur et
le micro-contrôleur est constitué pour la mémorisation de données,
**caractérisée en ce que**
des catégories d'accouplement sont définies dans le micro-contrôleur et **en ce que** la catégorie d'accouplement pour le module ou le support de module respectif à accoupler à l'interface est mémorisée de telle manière que le module ou le support de module peut être identifié et peut être vérifié quant à la compatibilité ou bien l'incompatibilité avec le processus de travail et/ou d'autres supports de module ou bien des modules et des outils.

2. Interface mécanique selon la revendication 1, **caractérisée en ce que** les deux composants d'interface (14, 15) comportent un microcontrôleur.

3. Interface mécanique selon la revendication 1 ou 2, **caractérisée en ce que** les données sont notamment les erreurs de positionnement conditionnées par le système, les tolérances de fabrication ou les données de spécification du module ou du support de module ou des composants d'interface.

4. Interface mécanique selon l'une quelconque des revendications précédentes, **caractérisée en ce que** le moyen de positionnement est un accouplement cinématique, de préférence un contact multipoints, en particulier de préférence un contact à six points, et/ou **en ce que** le moyen de fixation est un système magnétique (26), notamment un système à aimant permanent, et/ou **en ce que** le moyen de transmission de données (27a, 27b) est un contact tactile électrique, et/ou **en ce que** le moyen de transmission de puissance (28a, 28b) est un contact tactile électrique.

5. Système modulaire comprenant un premier module et un support de module ou comprenant un premier module et un deuxième module, **caractérisé en ce que** le système modulaire comporte une interface mécanique (13) selon l'une quelconque des revendications précédentes, sachant que le deuxième composant d'interface (15) peut être disposé sur le premier module, le premier composant d'interface (14) peut être disposé sur le support de module ou sur le deuxième module, le premier module peut être disposé au moyen de l'interface (13) sur le support de module ou sur le deuxième module et la puissance électrique et/ou les données peuvent être transmises au moyen de l'interface (13) entre le premier module et le support de module ou entre les modules.

6. Interface mécanique selon la revendication 5, **caractérisée en ce que** le support de module est un porte-outils, notamment un porte-outils pour micro-outils et **en ce que** le module est un module d'outil, notamment un micro-outil.

7. Machine, de préférence machine-outil, en particulier de préférence machine-micro-outil (100), **caractérisée en ce que** la machine comporte un système modulaire selon la revendication 5 ou 6 et/ou une interface mécanique (13) pour l'accouplement de modules à un support de module ou pour l'accouplement de deux modules selon l'une quelconque des revendications 1 à 4.

8. Machine selon la revendication 7, **caractérisée en ce que** la machine comporte un système de commande, sachant que le système de commande est constitué pour l'échange de données avec le microcontrôleur du premier composant d'interface (14) et/ou du deuxième composant d'interface (15), **en ce que** le système de commande est constitué pour l'exploitation des données du microcontrôleur, et **en ce que** le système de commande est constitué pour envoyer et/ou recevoir des données au ou du microcontrôleur.

9. Machine selon la revendication 8, **caractérisée en ce que** le système de commande, est constitué pour la commande de la machine et/ou de l'interface (13) et/ou des modules et/ou des supports de module notamment par l'exploitation des données du microcontrôleur et/ou **en ce que** le système de commande est constitué pour l'étalonnage de la configuration générale.

10. Machine selon l'une quelconque des revendications 7 à 9, **caractérisée en ce que** la machine est constituée avec un capteur de température dans ou à proximité de l'interface (13).
